# EUROPÄISCHE PATENTSCHRIFT

(11) **EP 1 389 546 B1**
(45) Veröffentlichungstag und Bekanntmachung des Hinweises auf die Patenterteilung: **17.12.2008**
(21) Anmeldenummer: 03018150.7
(22) Anmeldetag: 08.08.2003
(51) Int. Cl.: B60J 7/02

(54) **Gleitbackenführung für öffnungsfähige Fahrzeugdächer oder Fahrzeugklappen**
Guide channel for sliding shoes of openable vehicle roofs or covers
Canal de guidage pour patins glissants pour toit ou panneau ouvrant de véhicule

(30) Priorität: 13.08.2002 DE 10237091
(43) Veröffentlichungstag der Anmeldung: 18.02.2004
(73) Patentinhaber: Webasto AG, 82131 Stockdorf (DE)
(72) Erfinder: Stjepan, Radmanic, 82291 Mammendorf (DE)

(56) Entgegenhaltungen:
- EP-A- 0 403 738
- DE-C- 10 033 887
- DE-C- 19 820 699

## Beschreibung

Die Erfindung betrifft eine Gleitbackenführung für öffnungsfähige Fahrzeugdächer, mit einer einen Führungskanal aufweisenden Führungsbahn und einem in dem Führungskanal entlang der Führungsbahn verschiebbar geführten Gleitbacken, wobei die Führungsbahn mit mindestens einem im wesentlichen geradlinigen Führungsbahnbereich und mindestens einem gebogenen Führungsbahnbereich versehen ist.

Gleitbackenführungen dieser Art sind unter anderem aus DE 100 33 887 C1 bekannt. Bei einer ersten Ausführungsform (Fig. 4) ist der mit einem zugehörigen Trägerteil fest verbundene Gleitbacken im Längsquerschnitt im wesentlichen rhomboid- oder quaderförmig, wobei sein Abmessung in Horizontalrichtung größer als seine Abmessung in Vertikalrichtung ist. Die Höhe (Breite) eines im wesentlichen horizontal verlaufenden Führungsbahnbereichs ist an die Vertikalabmessung des Gleitbackens angepasst, während die Breite eines steil schräg oder vertikal verlaufenden Führungsbahnbereichs der Horizontalabmessung des Gleitbackens entspricht. Im Übergangsbereich zwischen diesen beiden Führungsbahnbereichen ändert sich die Führungsbahnbreite kontinuierlich von dem einen zu dem anderen Wert. Bei einer zweiten, gleichfalls aus DE 100 33 887 C1 bekannten Ausführungsform (Fig. 5) hat der Gleitbacken im Längsquerschnitt eine ovale Form, und die Führungsbahnbreite ist konstant. Im einen wie im anderen Fall lässt die Kurvengängigkeit des Gleitbackens zu wünschen übrig. Die erste Ausführungsform ist außerdem konstruktiv besonders aufwändig.

Es ist Aufgabe der vorliegenden Erfindung, eine konstruktiv relativ einfache Gleitbackenführung mit guter Kurvengängigkeit des Gleitbackens zu schaffen.

Diese Aufgabe wird erfindungsgemäß dadurch gelöst, dass bei einer Gleitbackenführung der eingangs genannten Art der Führungskanal im Bereich der gebogenen Führungsbahnbereiche der Führungsbahn breiter als im Bereich der im wesentlichen geradlinigen Führungsbahnbereiche ausgebildet ist.

Die Gleitbackenführung nach der Erfindung zeichnet sich durch verbesserte Kurvengängigkeit bei vermindertem Verschleiß aus. Sie vermeidet oder reduziert mindestens unerwünschte Klappergeräusche.

Bevorzugte Ausgestaltungen der Erfindung ergeben sich aus den Unteransprüchen.

Insbesondere ist die Aufweitung des Führungskanals in Kurvenbereichen der Führungsbahn vorzugsweise so bemessen, dass sich die Gleitbacke an die Führungskanalwände auch beim Durchlaufen solcher Kurvenbereiche im wesentlichen verformungsfrei anschmiegt.

Die angestrebte Kurvengängigkeit des Gleitbackens kann dadurch wesentlich weiter verbessert werden, dass der Gleitbacken drehbar abgestützt ist.

Vorzugsweise ist dabei die Ausbildung so getroffen, dass dass der Gleitbacken einen gummielastischen Gleitbackenkörper und eine auf den Gleitbackenkörper aufgesetzte Gleitkappe aufweist, und dass in den gummielastischen Gleitbackenkörper ein Trägerteil eingesetzt ist, das eine höhere Festigkeit und Steifigkeit als der Gleitbackenkörper hat und das seinerseits auf einem Tragbolzen drehbar gelagert ist.

Das Trägerteil kann aus hochfestem Kunststoff oder aus Metall bestehen. Vorzugsweise ist der Tragbolzen aus Metall gefertigt und mit das Trägerteil bildendem Kunststoff umspritzt, so dass das Trägerteil von vornherein auf dem Tragbolzen spielfrei drehbar ist. Gegebenenfalls kann das Trägerteil aber auch separat gespritzt und auf den Tragbolzen aufgeclipst sein.

Das Trägerteil kann für eine hochbelastbare Abstützung des Gleitbackenkörpers und der Gleitkappe eine den Tragbolzen umgreifende Nabe und zwei von gegenüberliegenden Seiten der Nabe im wesentlichen radial abstehende Flügel aufweisen.

Der Gleitbackenkörper ist vorzugsweise im wesentlichen kappenförmig mit einer Umfangswand und einer an die eine Seite der Umfangswand anschließenden Stirnwand ausgebildet und im Bereich seiner Umfangswand geschlitzt, wobei sich die Schlitze zweckmäßig in Längsrichtung des Gleitbackens und/oder in Querrichtung des Gleitbackens erstrecken.

Der Gleitbacken hat zweckmäßig im wesentlichen Quaderform und ist sowohl in Längsrichtung als auch in Querrichtung spiegelsymmetrisch ausgebildet.

Die Gleitkappe ist vorzugsweise auf das Trägerteil aufgeclipst und im Interesse hoher Stabilität mit dem Trägerteil in der Längsrichtung des Gleitbackens im wesentlichen spielfrei verbunden. Sie kann für letzteres insbesondere eine Umfangswand aufweisen, an deren Innenseite das Trägerteil im Bereich der Schmalseiten des Gleitbackens anliegt, da in Gleitbacken-Längsrichtung kein Toleranzausgleich notwendig ist.

Vorzugsweise ist die Gleitkappe aber für einen besonders wirkungsvollen Toleranzausgleich mit Bezug auf das Trägerteil sowohl in der Querrichtung des Gleitbackens als auch in Drehrichtung um die Achse des Tragbolzens elastisch verstellbar.

Dabei weist die Gleitkappe zweckmäßig eine Umfangswand auf, von deren Innenseite das Trägerteil im Bereich der Längsseiten des Gleitbackens in Abstand liegt.

Der gummielastische Gleitbackenkörper füllt vorteilhaft im wesentlichen den gesamten Raum zwischen dem Trägerteil und der Gleitkappe aus.

In die mit den Wänden des Führungskanals in Gleiteingriff kommenden Gleitflächen der Gleitkappe sind vorzugsweise - wie an sich aus DE 4336222 C1 bekannt - Abstreiflippen integriert, die schräg zur Verschieberichtung verlaufen und Schmutzpartikel beseitigen, die im Betrieb in die Gleitbackenführung eingedrungen sein können.

Im folgenden wird die Erfindung anhand der beigefügten Zeichnungen beispielhaft näher erläutert. Es zeigen:
Fig. 1 eine Explosionsdarstellung einer erfindungsgemäßen Gleitbackenführung,
Fig. 2 eine Seitenansicht der Gleitbacke der Fig.1 und der die Gleitbacke tragenden Abstützung,
Fig. 3 in größerem Maßstab eine Detailansicht des eingekreisten Teils der Fig. 2,
Fig. 4 einen Schnitt entlang der Linie A-A der Fig. 3,
Fig. 5 einen Schnitt entlang der Linie B-B der Fig. 3,
Fig. 6 eine perspektivische Ansicht der Gleitbacke in noch größerem Maßstab,
Fig. 7 eine vergrößerte Seitenansicht der Gleitbackenführung gemäß Fig. 1,
Fig. 8 eine Teilansicht eines mit der Gleitbackenführung gemäß den Figuren 1 bis 7 ausgestatteten öffnungsfähigen Fahrzeugdaches mit in Schließstellung befindlichem Deckel, und
Fig. 9 eine Teilansicht gemäß Fig. 8 bei angehobenem Deckel. >

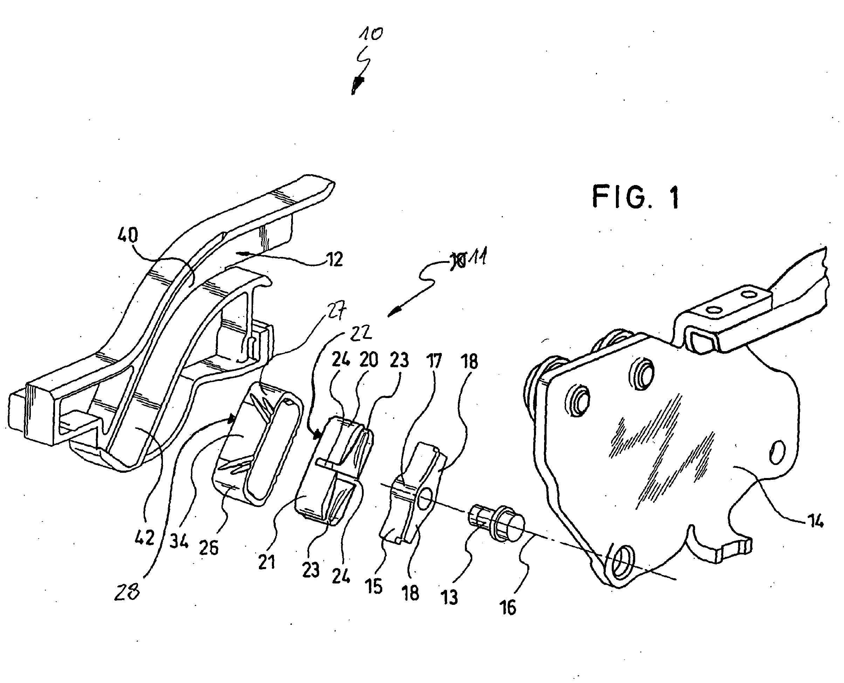

Die Figuren 1, 8 und 9 zeigen ein Ausführungsbeispiel der vorliegenden, insgesamt mit 10 bezeichneten Gleitbackenführung bei Anwendung für den vorderen Hubund Verschiebemechanismus eines aus DE 100 33 887 C1 bekannten Fahrzeügdaches. Es versteht sich jedoch, dass die Gleitbackenführung auch für jede beliebige andere Mechanik zum Betätigen eines öffnungsfähigen Fahrzeugdaches oder für eine Mechanik zum Betätigen einer Fahrzeugklappe mit Vorteil eingesetzt werden kann.

Zu der Gleitbackenführung 10 gehören ein mehrteiliger, im wesentlichen quaderförmiger Gleitbacken 11 und eine Führungsbahn 12. Der Gleitbacken 11 ist bezüglich sowohl einer Längsachse als auch einer Querachse im wesentlichen spiegelsymmetrisch ausgebildet, und er weist einen vorzugsweise metallischen Tragbolzen 13 auf. Der Tragbolzen 13 ist an einer im gezeigten Ausführungsbeispiel gleichfalls metallischen Abstützung 14 befestigt, zum Beispiel angenietet. Auf dem Tragbolzen 13 ist ein Trägerteil 15 um die Achse 16 des Tragbolzen 13 drehbar abgestützt. Das Trägerteil 15 kann aus einem Kunststoff mit hoher Festigkeit bestehen und beispielsweise unmittelbar durch Umspritzen des Tragbolzens 13 gefertigt sein. Dies hat den Vorteil, dass das angespritzte Kunststoff-Trägerteil auf dem Tragbolzen 13 spielfrei drehbar und somit ohne weiteren Aufwand klapperfrei ist. Das Kunststoff-Trägerteil kann aber auch separat gespritzt und anschließend auf den Tragbolzen 13 geclipst werden. Insbesondere wenn die Gleitbackenführung 10 für sehr hohe Beanspruchungen bestimmt ist, kann ferner das Trägerteil 15 auch aus Metall gefertigt und auf den Tragbolzen 13 aufgesteckt sein. Das Trägerteil 15 weist eine den Tragbolzen 13 umgreifende Nabe 17 und zwei Flügel 18 auf, die von einander diametral gegenüberliegenden Seiten der Nabe 17 im wesentlichen radial nach außen abstehen.

Auf das Trägerteil 15 ist ein gummielastischer, zweckmäßig aus Gummi gefertigter Gleitbackenkörper 20 aufgesteckt. Der Gleitbackenkörper 20 hat geringere Festigkeit und Steifigkeit als das Trägerteil 15, und er sorgt dadurch für Toleranzausgleich und Dämpfung. Der insgesamt im wesentlichen kappenförmige Gleitbackenkörper 20 weist eine Umfangswand 21 und eine an die eine Seite der Umfangswand 21 anschließende Stirnwand 22 auf. Die Innenseite der Stirnwand 22 liegt an der von der Abstützung 14 abgewendeten Seite der Flügel 18 an. Die Umfangswand 21 ist in Längsrichtung der Gleitbacke bei 23 und in Querrichtung der Gleitbacke bei 24 geschlitzt.

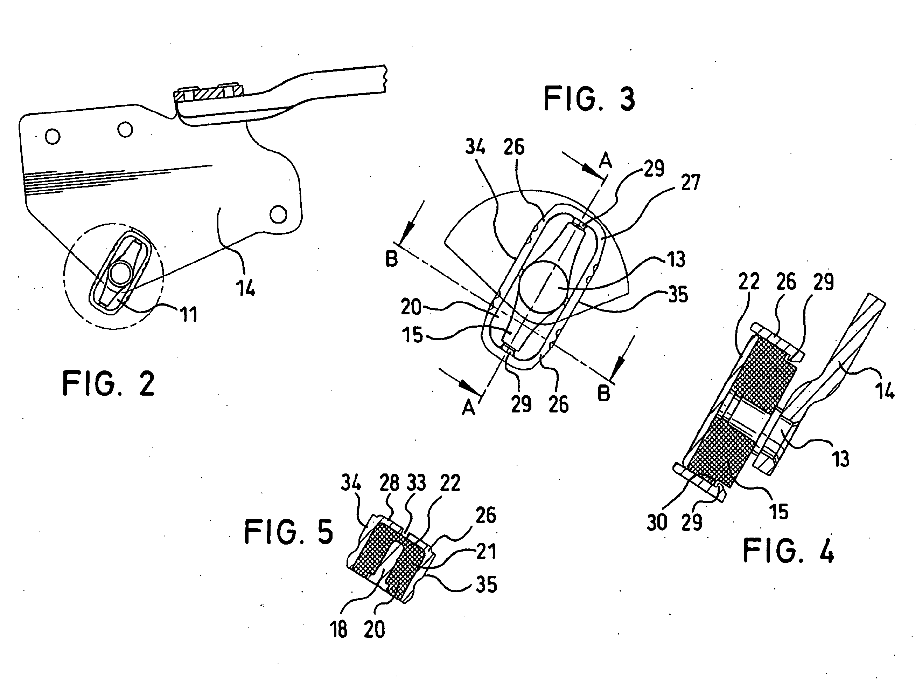

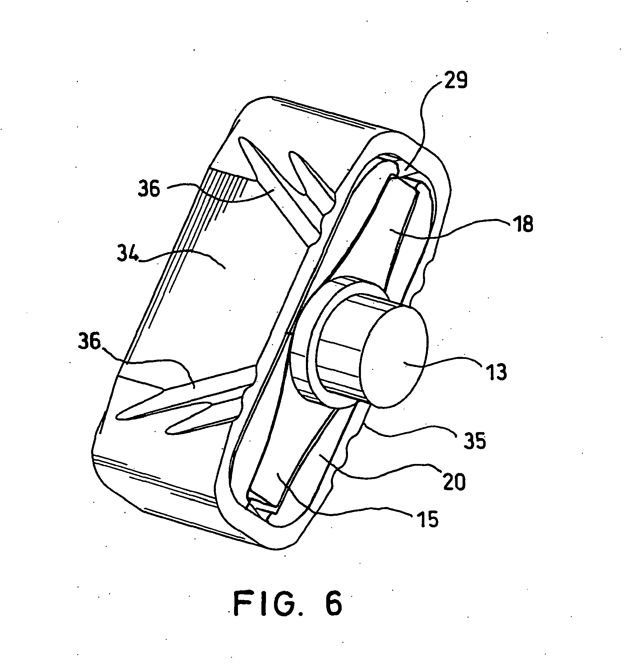

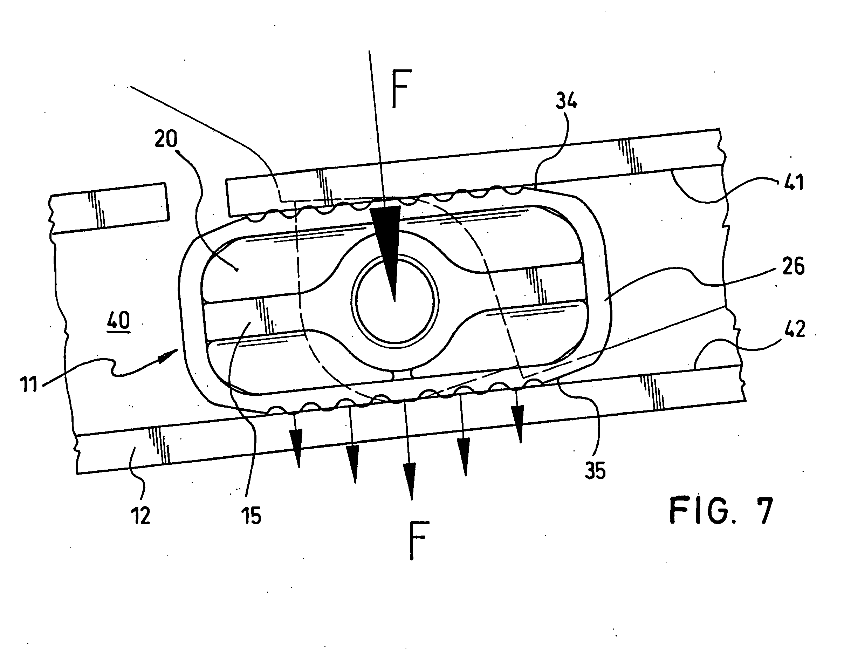

Auf den Gleitbackenkörper 20 ist schließlich eine Gleitkappe 26 mit einer Umfangswand 27 und einer an die eine Seite der Umfangswand 27 anschließenden Stirnwand 28 aufgesteckt. Im Bereich der Schmalseiten des Gleitbackens 11 steht die Innenseite der Umfangswand 27 der Gleitkappe 26 mit den Schmalseiten des Trägerteils 15 in Berührung, während die Innenseite der Umfangswand 27 im Bereich der Längsseiten des Gleitbackens in Abstand von den Längsseiten des Trägerteils 15 liegt. Der gummielastische Gleitbackenkörper 20 füllt dabei im wesentlichen den gesamten Raum zwischen dem Trägerteil 15 und der Gleitkappe 26 aus. Die Flügel 18 können entsprechend den Figuren 7 bis 9 über ihre volle Länge eine im wesentlichen konstante Dicke aufweisen oder sich, wie in den Figuren 1 bis 6 dargestellt, radial nach außen verjüngen. Dementsprechend hat die Umfangswand 21 des Gleitbackenkörpers 20 im Bereich der Flügel 18 eine im wesentlichen konstante Dicke (Figuren 7 bis 9), oder diese Dicke nimmt in Richtung auf die von der Nabe 17 abliegenden Flügelenden zu (Figuren 1 bis 6). Im eine wie im anderen Fall sorgt die erläuterte Anordnung dafür, dass sich unter Ausnutzung der elastischen Eigenschaften des Gleitbackenkörpers 20 die Gleitkappe 26 mit Bezug auf das Trägerteil 15 sowohl in der Querrichtung des Gleitbackens 11 als auch in Drehrichtung um die Achse 16 des Tragbolzens 13 begrenzt verlagern kann. Außerdem kann der Gleitbacken 11 als Ganzes in Querrichtung begrenzt zusammengedrückt werden, wenn die Gleitkappe 26 eine begrenzte Elastizität aufweist. Dagegen stehen die Gleitkappe 26 und das Trägerteil 15 in der Längsrichtung des Gleitbackens 11 im wesentlichen spielfrei miteinander in Eingriff.
Die Innenseite der Stirnwand 28 liegt an der Außenseite der Stirnwand 22 des Gleitbackenkörpers 20 an. An der der Abstützung 14 zugewendeten Seite der Umfangswand 27 befinden sich im Bereich der Schmalseiten der Gleitbacke 11 Rastnasen 29. Die Rastnasen 29 legen sich gegen eine Schulter 30 an, die an der der Abstützung 14 zugewendeten Seite des Trägerteils 15 ausgebildet ist. Auf diese Weise werden das Trägerteil 15, der Gleitbackenkörper 20 und die Gleitkappe 26 sicher zusammengehalten. Die Stirnwand 28 der Gleitkappe 26 weist einen Längsschlitz 33 auf.

Die Gleitkappe 26 ist vorzugsweise aus einem Kunststoff mit guten Gleiteigenschaften und günstigem Geräuschverhalten, beispielsweise aus Polyethylen (PE) oder Polytetrafluorethylen (PTFE) gefertigt. Als besonders geeignet für die vorliegenden Zwecke erwies sich ein Polyethylen hoher Dichte (HDEP), wie der unter dem Handelsnamen "Rigidex". vertriebene Werkstoff. Die beiden Längsaußenseiten der Umfangswand 27 der Gleitkappe 26 bilden zwei einander gegenüberliegende Gleitflächen 34, 35. Falls erwünscht, kann die Außenseite der Stirnwand 28 der Gleitkappe 26 als eine weitere Gleitfläche genutzt werden. An den Gleitflächen 34, 35 sind schräg zur Verschieberichtung verlaufende, erhabene Abstreifrippen 36 ausgebildet. Die Abstreifrippen 36 sorgen zum einen für eine linienförmige Berührung der Gleitflächen 34, 35 des Gleitbackens 11 mit Gleitflächen 41, 42 der Führungsbahn 12. Zum anderen bilden sie eine Abstreifeinrichtung für Schmutzpartikel. Die Verwendung solcher Abstreifrippen ist an sich bekannt und in DE 43 36 222 C1 näher erläutert. Die Abstreifrippen 36 und deren Funktion bedürfen daher vorliegend keiner weiteren Erklärung.

Die Führungsbahn 12 weist einen Führungskanal 40 auf, in den der Gleitbacken 11 eintaucht (Figuren 7 bis 9) und entlang dem der Gleitbacken 11 verschoben werden kann. Dabei stehen die Gleitflächen 34, 35 des Gleitbackens 11 mit Gleitflächen 41, 42 der Führungsbahn 12 in Gleiteingriff (Fig. 7).

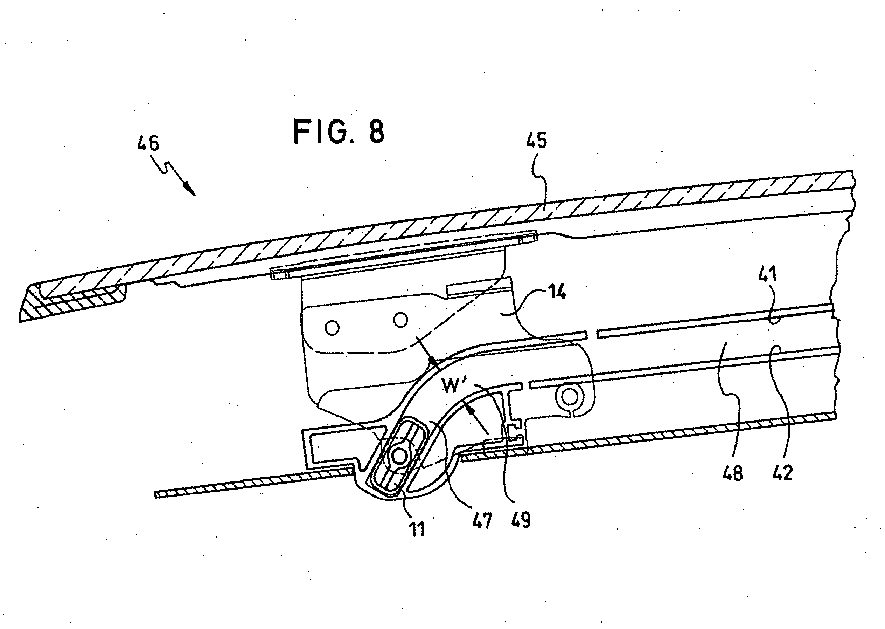

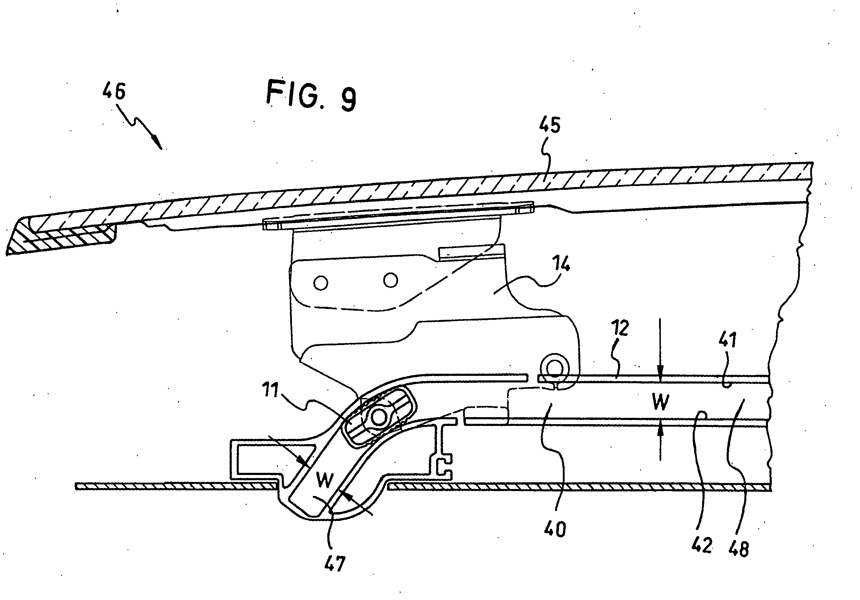

Bei dem in den Figuren 1, 8 und 9 gezeigten Ausführungsbeispiel ist die Gleitbackenführung 10 Teil des vorderen Hub- und Verschiebemechanismus für einen Deckel 45 eines insgesamt mit 46 bezeichneten öffnungsfähigen Fahrzeugdaches. Dabei ist der Deckel 45 mittels einer entsprechenden Mechanik austellbar und oberhalb der Dachfläche verschiebbar, wie dies im einzelnen in DE 100 33 887 C1 beschrieben ist. Die mit dem Tragbolzen 13 des Gleitbackens 11 verbundene Abstützung 14 ist an der Unterseite des Deckels 45 angebracht. Die beispielsweise von mindestens einer Führungsschiene und/oder einer Kulisse gebildete Führungsbahn 12 ist in ihrem vorderen, in den Figuren 8 und 9 linken Bereich nach vorne und unten abgewinkelt, so dass sich zwischen einem vorderen, im wesentlichen geradlinig schräg verlaufenden, parallelen Führungsbahnbereich 47 und einem in Fahrzeuglängsrichtung dahinter liegenden, im wesentlichen geradlinig horizontal verlaufenden, parallelen Führungsbahnbereich 48 ein gebogener Führungsbahnbereich 49 befindet. Der in Fig. 7 angedeutete Kraftfluß F erfolgt von dem Deckel 45 über die Abstützung 14 und den Tragbolzen 13 zu dem relativ festen Trägerteil 15. Über das Trägerteil 15 und den es umgebenden Gleitbackenkörper 20 wird eine Verringerung der Flächenpressung zwischen der Gleitkappe 26 und dem Gleitpartner, das heißt der die Führungsbahn 12 bildenden Führungsschiene oder Kulisse, erreicht.

Für einen auch im Langzeitbetrieb störungsfreien Übergang des Gleitbackens 11 von einem zu einem anderen der Führungsbahnbereiche 47, 48, 49 kommt es auf eine gute Kurvengängigkeit des Gleitbackens 11 in der Führungsbahn 12 an. Eine solche verbesserte Kurvengängigkeit wird dadurch erzielt, dass die Führungsbahn 12 in gebogenen Bereichen, wie dem Führungsbahnbereich 49, aufgeweitet ist. Das heißt, die Weite W' (Fig. 8) des gebogenen Führungsbahnbereichs 49 ist größer bemessen als die Weite W der parallelen Führungsbahnbereiche 47 und 48 (Fig. 7). Die Differenz der Weiten W' und W ist dabei vorzugsweise so gewählt, dass der Gleitbacken 11 beim Durchlaufen der Folge von Führungsbahnbereichen 47, 48, 49 nur verschoben und gedreht, nicht aber verformt wird, sofern der Gleitbacken 11 und die Führungsbahn 12 ihre Sollabmessungen haben. In Kurvenbereichen kommt es dann zu einer "Drei-Linien-Auflage" der Gleitflächen 34, 35 des Gleitbackens 11 auf den Gleitflächen 41, 42 der Führungsbahn 12. Die Verformbarkeit des Gleitbackens 11 kann dann in vollem Umfang für einen möglicherweise notwendig werdenden Toleranzausgleich genutzt werden.

Die beschriebene Gleitbackenführung ermöglicht das Tragen von hohen Deckelgewichten. Der Gleitbacken ist über die Lebensdauer des Systems verschleißarm, und er sorgt zuverlässig für eine Klapperfreiheit des Systems.

### Bezugszeichenliste

- 10: Gleitbackenführung
- 11 1: Gleitbacken
- 12: Führungsbahn
- 13: Tragbolzen
- 14: Abstützung
- 15: Trägerteil
- 16: Achse von 13
- 17: Nabe
- 18: Flügel
- 20: Gleitbackenkörper
- 21: Umfangswand
- 22: Stirnwand
- 23: Schlitz
- 24: Schlitz
- 26: Gleitkappe
- 27: Umfangswand
- 28: Stirnwand
- 29: Rastnase
- 30: Schulter
- 33: Längsschlitz
- 34: Gleitfläche
- 35: Gleitfläche
- 36: Abstreifrippen
- 40: Führungskanal
- 41: Gleitfläche
- 42: Gleitfläche
- 45: Deckel
- 46: Fahrzeugdach
- 47: paralleler Führungsbahnbereich
- 48: paralleler Führungsbahnbereich
- 49: gebogener Führungsbahnbereich

## Patentansprüche

1. Gleitbackenführung für öffnungsfähige Fahrzeugdächer oder Fahrzeugklappen, mit einer einen Führungskanal (40) aufweisenden Führungsbahn (12) und einem in dem Führungskanal entlang der Führungsbahn verschiebbar geführten Gleitbacken (11), wobei die Führungsbahn mit mindestens einem im wesentlichen geradlinigen Führungsbahnbereich (47, 48) und mindestens einem gebogenen Führungsbahnbereich (49) versehen ist, **dadurch gekennzeichnet, dass** der Führungskanal (40) im Bereich der gebogenen Führungsbahnbereiche (49) der Führungsbahn (12) breiter als im Bereich der im wesentlichen geradlinigen Führungsbahnbereiche (47, 48) ausgebildet ist.

2. Gleitbackenführung nach Anspruch 1, **dadurch gekennzeichnet, dass** die Aufweitung des Führungskanals (40) in gebogenen Führungsbahnbereichen (49) so bemessen ist, dass sich die Gleitbacke (11) an die Gleitflächen (41, 42) des Führungskanals auch beim Durchlaufen solcher gebogener Führungsbahnbereiche im wesentlichen verformungsfrei anschmiegt.

3. Gleitbackenführung nach Anspruch 1 oder 2, **dadurch gekennzeichnet, dass** der
Gleitbacken (11) drehbar abgestützt ist.

4. Gleitbackenführung nach Anspruch 3, **dadurch gekennzeichnet, dass** der Gleitbacken (11) einen gummielastischen Gleitbackenkörper (20) und eine auf den Gleitbackenkörper aufgesetzte Gleitkappe (26) aufweist, und dass in den gummielastischen Gleitbackenkörper (20) ein Trägerteil (15) eingesetzt ist, das eine höhere Festigkeit und Steifigkeit als der Gleitbackenkörper hat und das seinerseits auf einem Tragbolzen (13) drehbar gelagert ist.

5. Gleitbackenführung nach Anspruch 4, **dadurch gekennzeichnet, dass** das Trägerteil (15) aus Kunststoff besteht.

6. Gleitbackenführung nach Anspruch 5, **dadurch gekennzeichnet, dass** der Tragbolzen (13) aus Metall gefertigt und mit das Trägerteil (15) bildendem Kunststoff umspritzt ist.

7. Gleitbackenführung nach Anspruch 5, **dadurch gekennzeichnet, dass** das Trägerteil (15) auf den Tragbolzen (13) aufgeclipst ist.

8. Gleitbackenführung nach Anspruch 4, **dadurch gekennzeichnet, dass** das Trägerteil (15) aus Metall besteht und auf den Tragbolzen (13) aufgesteckt ist.

9. Gleitbackenführung nach einem der Ansprüche 4 bis 8, **dadurch gekennzeichnet, dass** das Trägerteil (15) eine den Tragbolzen (13) umgreifende Nabe (17) und zwei von gegenüberliegenden Seiten der Nabe im wesentlichen radial abstehende Flügel (18) aufweist.

10. Gleitbackenführung nach einem der Ansprüche 4 bis 9, **dadurch gekennzeichnet, dass** der Gleitbackenkörper (20) im wesentlichen kappenförmig mit einer Umfangswand (21) und einer an die eine Seite der Umfangswand anschließenden Stirnwand (22) ausgebildet ist.

11. Gleitbackenführung nach Anspruch 10, **dadurch gekennzeichnet, dass** der Gleitbackenkörper (20) im Bereich seiner Umfangswand (21) geschlitzt ist.

12. Gleitbackenführung nach einem der vorhergehenden Ansprüche, **dadurch gekennzeichnet, dass** der Gleitbacken (11) im wesentlichen Quaderform hat.

13. Gleitbackenführung nach einem der vorhergehenden Ansprüche, **dadurch gekennzeichnet, dass** der Gleitbacken (11) sowohl in Längsrichtung als auch in Querrichtung spiegelsymmetrisch ausgebildet ist.

14. Gleitbackenführung nach Ansprüchen 11 und 12, **dadurch gekennzeichnet, dass** die Umfangswand (21) des Gleitbackenkörpers (20) in Längsrichtung des Gleitbackens (11) und/oder in Querrichtung des Gleitbackens geschlitzt ist.

15. Gleitbackenführung nach einem der Ansprüche 4 bis 14, **dadurch gekennzeichnet, dass** die Gleitkappe (26) auf das Trägerteil (15) aufgeclipst ist.

16. Gleitbackenführung nach einem der Ansprüche 12 bis 15, **dadurch gekennzeichnet, dass** die Gleitkappe (26) und das Trägerteil (15) in der Längsrichtung des Gleitbackens (11) im wesentlichen spielfrei miteinander verbunden sind.

17. Gleitbackenführung nach Anspruch 16, **dadurch gekennzeichnet, dass** die Gleitkappe (26) eine Umfangswand (27) aufweist, an deren Innenseite das Trägerteil (15) im Bereich der Schmalseiten des Gleitbackens (11) anliegt.

18. Gleitbackenführung nach einem der Ansprüche 12 bis 17, **dadurch gekennzeichnet, dass** die Gleitkappe (26) mit Bezug auf das Trägerteil (15) sowohl in der Querrichtung des Gleitbackens (11) als auch in Drehrichtung um die Achse (16) des Tragbolzens (13) elastisch verstellbar ist.

19. Gleitbackenführung nach Anspruch 18, **dadurch gekennzeichnet, dass** die Gleitkappe (26) eine Umfangswand (27) aufweist, von deren Innenseite das Trägerteil (15) im Bereich der Längsseiten des Gleitbackens (11) in Abstand liegt.

20. Gleitbackenführung nach einem der Ansprüche 4 bis 19, **dadurch gekennzeichnet, dass** der gummielastische Gleitbackenkörper (20) im wesentlichen den gesamten Raum zwischen dem Trägerteil (15) und der Gleitkappe (26) ausfüllt.

21. Gleitbackenführung nach einem der Ansprüche 4 bis 20, **dadurch gekennzeichnet, dass** in die mit Gleitflächen (41, 42) des Führungskanals (40) in Gleiteingriff kommenden Gleitflächen (34, 35) der Gleitkappe (26) Abstreifrippen (36) integriert sind, die schräg zur Verschieberichtung des Gleitbackens (11) verlaufen.

## Claims

1. Sliding block guide for openable vehicle roofs or vehicle flaps, with a guide track (12) having a guide channel (40), and with a sliding block (11) which is guided displaceably in the guide channel along the guide track, wherein the guide track is provided with at least one substantially rectilinear guide track region (47, 48) and at least one curved guide track region (49), **characterized in that** the guide channel (40) is of wider design in the region of the curved guide track region (49) of the guide track (12) than in the region of the substantially rectilinear guide track regions (47, 48).

2. Sliding block guide according to Claim 1, **characterized in that** the expansion of the guide channel (40) in curved guide track regions (49) is dimensioned in such a manner that the sliding block (11) fits snugly in a manner substantially free from deformation against the sliding surfaces (41, 42) of the guide channel even as it passes through such curved guide track regions.

3. Sliding block guide according to Claim 1 or 2, **characterized in that** the sliding block (11) is supported rotatably.

4. Sliding block guide according to Claim 3, **characterized in that** the sliding block (11) has a rubber-elastic sliding block body (20) and a sliding cap (26) placed onto the sliding block body, and **in that** a support part (15) is inserted into the rubber-elastic sliding block guide (20), said support part having greater strength and rigidity than the sliding block body and, for its part, being mounted rotatably on a support pin (13).

5. Sliding block guide according to Claim 4, **characterized in that** the support part (15) is composed of plastic.

6. Sliding block guide according to Claim 5, **characterized in that** the supporting pin (13) is manufactured from metal and is encapsulated by injection moulding with plastic which forms the support body (15).

7. Sliding block guide according to Claim 5, **characterized in that** the support part (15) is clipped onto the supporting pin (13).

8. Sliding block guide according to Claim 4, **characterized in that** the support part (15) is composed of metal and is plugged onto the supporting pin (13).

9. Sliding block guide according to one of Claims 4 to 8, **characterized in that** the support part (15) has a hub (17) which fits around the supporting pin (13), and two wings (18) which protrude substantially radially from opposite sides of the hub.

10. Sliding block guide according to one of Claims 4 to 9, **characterized in that** the sliding block body (20) is of substantially cap-shaped design with a circumferential wall (21) and an end wall (22) adjoining one side of the circumferential wall.

11. Sliding block guide according to Claim 10, **characterized in that** the sliding block body (20) is slotted in the region of its circumferential wall (21).

12. Sliding block guide according to one of the preceding claims, **characterized in that** the sliding block (11) has a substantially cuboidal form.

13. Sliding block guide according to one of the preceding claims, **characterized in that** the sliding block (11) is of mirror-symmetrical design both in the longitudinal direction and in the transverse direction.

14. Sliding block guide according to Claims 11 and 12, **characterized in that** the circumferential wall (21) of the sliding block body (20) is slotted in the longitudinal direction of the sliding block (11) and/or in the transverse direction of the sliding block.

15. Sliding block guide according to one of Claims 4 to 14, **characterized in that** the sliding cap (26) is clipped onto the support part (15).

16. Sliding block guide according to one of Claims 12 to 15, **characterized in that** the sliding cap (26) and the support part (15) are connected to each other in a manner substantially free from play in the longitudinal direction of the sliding block (11).

17. Sliding block guide according to Claim 16, **characterized in that** the sliding cap (26) has a circumferential wall (27) against the inside of which the support part (15) bears in the region of the narrow sides of the sliding block (11).

18. Sliding block guide according to one of Claims 12 to 17, **characterized in that** the sliding cap (26) can be adjusted elastically with respect to the support part (15) both in the transverse direction of the sliding block (11) and in the direction of rotation about the axis (16) of the supporting pin (13).

19. Sliding block guide according to Claim 18, **characterized in that** the sliding cap (26) has a circumferential wall (27), and the support part (15) is located at a distance therefrom in the region of the longitudinal sides of the sliding block (11).

20. Sliding block guide according to one of Claims 4 to 19, **characterized in that** the rubber-elastic sliding block body (20) substantially fills the entire space between the support part (15) and the sliding cap (26).

21. Sliding block guide according to one of Claims 4 to 20, **characterized in that** stripping ribs (36) which run obliquely with respect to the direction of displacement of the sliding block (11) are integrated in the sliding surfaces (34, 35) of the sliding cap (26), which sliding surfaces come into sliding engagement with sliding surfaces (41, 42) of the guide channel (40).

## Revendications

1. Canal de guidage pour patins glissants pour un toit ou un panneau ouvrant de véhicule, avec une glissière de guidage (12) comportant un canal de guidage (40) et un patin glissant (11) étant introduit de façon coulissante dans le canal de guidage le long de la glissière de guidage, la glissière de guidage étant pourvue d'au moins une zone de glissière de guidage (47, 48) pour l'essentiel rectiligne et d'au moins une zone de glissière de guidage (49) incurvée, **caractérisé en ce que** le canal de guidage (40) est plus large dans la zone des zones de glissière de guidage (49) incurvées de la glissière de guidage (12) que dans la zone des zones de glissière de guidage (47, 48) pour l'essentiel rectilignes.

2. Canal de guidage pour patins glissants selon la revendication 1, **caractérisé en ce que** l'élargissement du canal de guidage (40) est mesuré de tel sorte dans les zones de glissière de guidage (49) incurvées que le patin glissant (11) s'adapte pour l'essentiel sans déformation aux surfaces de glissement (41, 42) du canal de guidage, et ce également lors du passage au niveau des zones de glissière de guidage incurvées.

3. Canal de guidage pour patins glissants selon la revendication 1 ou 2, **caractérisé en ce que** le patin glissant (11) est supporté de façon à pouvoir tourner.

4. Canal de guidage pour patins glissants selon la revendication 3, **caractérisé en ce que** le patin glissant (11) comporte un corps de patin glissant (20) en caoutchouc élastique et un cache glissant (26) disposé sur le corps de patin glissant et **en ce qu'**une partie porteuse (15) est insérée dans le corps de patin glissant (20) en caoutchouc élastique, ladite pièce ayant une résistance et une rigidité supérieures à celles du corps de patin glissant et étant disposées sur un boulon porteur (13) de façon à pouvoir tourner.

5. Canal de guidage pour patins glissants selon la revendication 4, **caractérisé en ce que** la partie porteuse (15) est en matière synthétique.

6. Canal de guidage pour patins glissants selon la revendication 5, **caractérisé en ce que** le boulon porteur (13) est fabriqué en métal et est couvert par extrusion par la matière synthétique formant la partie porteuse (15).

7. Canal de guidage pour patins glissants selon la revendication 5, **caractérisé en ce que** la partie porteuse (15) est clipsée sur le boulon porteur (13).

8. Canal de guidage pour patins glissants selon la revendication 4, **caractérisé en ce que** la partie porteuse (15) est en métal et est disposée sur le boulon porteur (13).

9. Canal de guidage pour patins glissants selon l'une quelconque des revendications 4 à 8, **caractérisé en ce que** la partie porteuse (15) comporte un moyeu (17) enveloppant le boulon porteur (13) et **en ce que** deux des côtés opposés du moyeu comportent des ailettes (18) pour l'essentiel écartées dans le plan radial.

10. Canal de guidage pour patins glissants selon l'une quelconque des revendications 4 à 9, **caractérisé en ce que** le corps de patin glissant (20) prend pour l'essentiel une forme de cache avec une paroi périphérique (21) et une paroi avant (22) jointe à un côté de la paroi périphérique.

11. Canal de guidage pour patins glissants selon la revendication 10, **caractérisé en ce que** le corps de patin glissant (20) est fendu dans la zone de sa paroi périphérique (21).

12. Canal de guidage pour patins glissants selon l'une quelconque des revendications précédentes, **caractérisé en ce que** le patin glissant (11) prend pour l'essentiel une forme de parallélépipède.

13. Canal de guidage pour patins glissants selon l'une quelconque des revendications précédentes, **caractérisé en ce que** le patin glissant (11) est formé de façon symétrique par rapport à un plan tant dans la direction longitudinale que dans la direction transversale.

14. Canal de guidage pour patins glissants selon les revendications 11 et 12, **caractérisé en ce que** la paroi périphérique (21) du corps de patin glissant (20) est fendu dans la direction longitudinale du patin glissant (11) et/ou dans la direction transversale du patin glissant.

15. Canal de guidage pour patins glissants selon l'une quelconque des revendications 4 à 14, **caractérisé en ce que** le cache glissant (26) est clipsé sur la partie porteuse (15).

16. Canal de guidage pour patins glissants selon l'une quelconque des revendications 12 à 15, **caractérisé en ce que** le cache glissant (26) et la partie porteuse (15) sont reliés entre eux pour l'essentiel sans jeu dans la direction longitudinale du patin glissant (11).

17. Canal de guidage pour patins glissants selon la revendication 16, **caractérisé en ce que** le cache glissant (26) comporte une paroi périphérique (27) à l'intérieur de laquelle la partie porteuse (15) repose dans la zone des côtés étroits du patin glissant (11).

18. Canal de guidage pour patins glissants selon l'une quelconque des revendications 12 à 17, **caractérisé en ce que** le cache glissant (26) peut être réglé de façon élastique par rapport à la partie porteuse (15) tant dans la direction transversale du patin glissant (11) que dans la direction de rotation autour de l'axe (16) du boulon porteur (13).

19. Canal de guidage pour patins glissants selon la revendication 18, **caractérisé en ce que** le cache glissant (26) comporte une paroi périphérique (27) à l'intérieur de laquelle la partie porteuse (15) repose à une certaine distance dans la zone des côtés longitudinaux du patin glissant (11).

20. Canal de guidage pour patins glissants selon l'une quelconque des revendications 4 à 19, **caractérisé en ce que** le corps de patin glissant (20) en caoutchouc élastique remplit pour l'essentiel l'ensemble de l'espace entre la partie porteuse (15) et le cache glissant (26).

21. Canal de guidage pour patins glissants selon l'une quelconque des revendications 4 à 20, **caractérisé en ce que** des nervures d'extraction (36) sont intégrées dans les surfaces de glissement (34, 35) du cache glissant (26) entrant en prise par glissement avec les surfaces de glissement (41, 42) du canal de guidage (40), lesdites rainures s'étendant de façon oblique par rapport à la direction de déplacement du patin glissant (11).
